# EUROPEAN PATENT APPLICATION

(11) **EP 1 489 285 A2**
(43) Date of publication of application: **22.12.2004**
(21) Application number: 04252832.3
(22) Date of filing: 15.05.2004
(51) Int. Cl.: F02D 9/10

(54) **Flap valve assembly**

(30) Priority: 16.06.2003 GB 0313817
(71) Applicant: Delpji Technologies Inc, Troy, Michigan 48007 (US)
(72) Inventor: Fromentin, Sylvie, 5L-8447 Steinfort (FR)
(74) Representative: Jones, Keith William

(57) **Abstract**

The present invention relates to Flap Valve Assembly (1) for controlling the flow of air along a passage (4) comprising a spindle (2), which is rotatable about its axis, extending across the passage (4) and a flap valve (3) secured to the spindle (2) inside the passage (4) such that rotation of the spindle (2) causes the flap valve to pivot about the spindle (2) axis, wherein the flap valve (3) is moveable between a position in which the passage (4) is substantially fully closed and a position wherein the passage (4) is substantially fully open characterised in that, the flap valve (3) comprises a lamination of a support layer (3a, 3b) and an elastomeric layer (3c), the outer diameter (D3) of the support layer (3a, 3b) being smaller than the inner diameter (D2) of the passage (4) and the outer diameter (D1) of the elastomeric layer (3c) being greater than the outer diameter (D2) of the passage (4).

## Description

### Technical Fields

The present invention relates to a flap valve assembly for controlling the flow of air along a passage.

### Background of the Invention

The flap valve assembly is known for controlling the flow of air along a passage. The flap valve assembly comprises a spindle which is rotatable about its axis. The spindle extends across the passage. The flap valve is secured to the spindle inside the passage such that the rotation of the spindle causes the flap valve to pivot about the spindle axis. The flap valve is moveable between the position in which the passage is substantially closed, and the position in which the passage is substantially fully open. Such an arrangement is known for the throttle control of air flow to the cylinders of an internal combustion engine. It has been proposed to manufacture passage walls, i.e. the throttle body from plastics material. In general, the flap valve is formed from metallic material. Because of the thermal differences between materials, the flap valve may stick to the passage walls in case plastic materials are used for the passage walls.

In order to overcome the problem of the flap valve sticking to the passage walls, internal diameter of the passage may be increased. Such an arrangement would increase the leakage past the flap valve when the passage is meant to be substantially closed.
The requirements for minimal leakage in the passage which allows air flow to the cylinders of an internal combustion engine are still increased. A flap valve assembly should be provided which allows minimal leakage of air in the passage.

### Summary of the Invention

It is an object of the present invention to overcome the above mentioned problem and to provide a flap valve assembly which allows minimal leakage in an air passage. In accordance with the present invention, there is provided a (INSERT CLAIM 1 without ref nos and change characterised to wherein).

With this arrangement the elastomeric layer which protrudes beyond the support layer forms a seal with the passage walls, to substantially close the passage when required. The risk of the support layer sticking to the passage walls is substantially reduced.

According to the present invention it is possible that flap valve assembly (1), according to claim 1, wherein the flap valve (3), comprises a lamination of a first (3a) and a second (3b) outer support layer with an intermediate elastomeric layer (3c).

With this arrangement it is achieved that the elastomeric layer is supported on both sides. The support members not only add a required ridgedness to the elastomeric layer, they will also increase the temperature assistance, the fluid resistance and the gas resistance of the flap valve.

In a preferred embodiment, the lamination comprises a metallic support layer. According to these arrangements the elastomeric layer can be provided on one side or both sides with a metallic support layer.

In order to have an optimal sealing between the flap valve and the passage wall, it is important to choose the right elastomeric material. In case the elastomeric material would be too soft, the material would get sucked into the gap between the outer edges of the support layer and the passage wall. In case the elastomeric material would be too hard, the hardness of the material would decrease the abilities of providing an optimal seal between the flap valve and the passage wall.

The elastomeric material should also be chosen with an eye on thermal ageing of the material in order to overcome brittleness and porousness of the elastomeric material in use.

In order to achieve these objects it is preferred that the elastomeric layer comprises ((Sylvie please add the preferred elastomeric material here)).

According to the invention it is preferred that flap valve assembly (1), according to one of the preceding claims, wherein the elastomeric layer (3c) has a thickness of 0.5-2.5mm, preferably 1mm.

According to a preferred embodiment flap valve assembly (1), according to one of the preceding claims, wherein the outer edge (8) of the support layer (3a, 3c) is chamfered.

### Brief Description of the Drawings

The present invention will now be described by way of example, with reference to the accompanying drawings, in which:
Figure 1 is a cross-sectional view of a flap valve assembly in accordance with the present invention:
Figure 2 is a side view of the flap valve and spindle of the assembly of figure 1 and;
Figure 3 is a cross-section view on the line III-III of Figure 2.

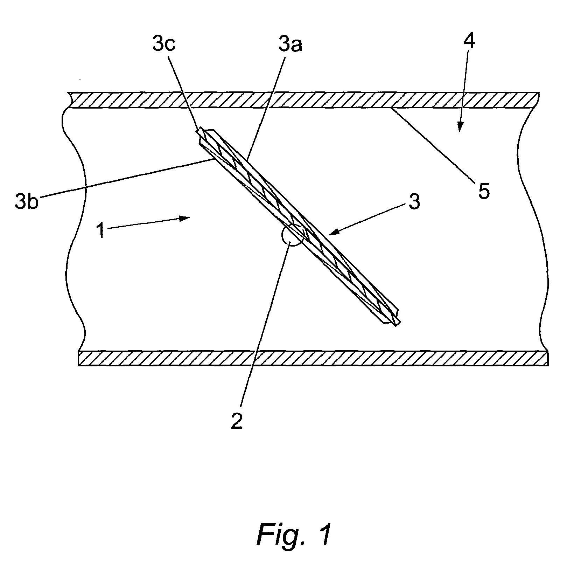

Figure 1 is a cross-sectional view of a flap valve assembly 1 in accordance with the present invention.

The flap valve assembly 1 comprises a spindle 2 and a flap valve 3. The flap valve 3 comprises a lamination of a first 3a and a second 3b support layer and an intermediate elastomeric layer 3c.

The flap valve assembly 1 is positioned in a passage 4, having an interial wall 5.

The flap valve 3 is moveable by means of the spindle 2 in a clockwise direction to substantially close off the passage 4. From the position indicated in Figure 1, the flap valve is moveable in a counter clockwise direction in order to align the flap valve 3 with the internal wall 5 of the passage 4 in order to substantially fully open the passage 4.

In order to obtain optimal sealing of the flap valve against the interior wall 5 of the passage 4, the outer diameter D1 of the elastomeric layer 3c is greater than the outer diameter D2 of the passage 4. The outer diameter D3 of the support layer 3a, 3b is smaller than the outer diameter D2 of the passage 4. Because of this arrangement the outer edge of the elastomeric layer 3c will be forced against the interior wall 5 of the passage 4 upon closing of the flap valve. In case the wall 5 of the passage 4 comprises plastic material, thermal differences between plastic material of the wall 5 and the material of the support layers 3a, 3b (for instance metal) will not lead to sticking of the flap valve against the interior wall 5. This is achieved in that the outer diameter D3 of the support layer 3a, 3b is smaller than the outer diameter D2 of the interior wall 5.

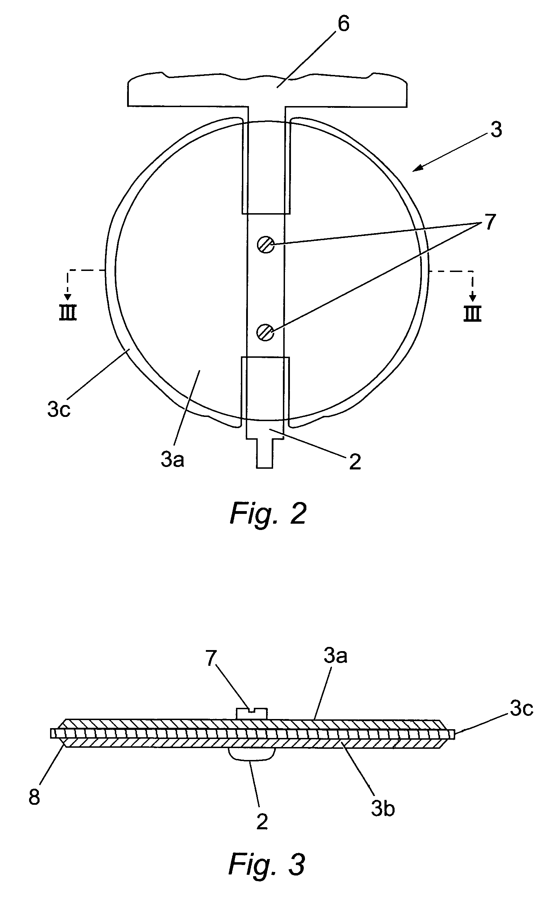

Figure 2 is a side view of the flap valve 3 and the spindle 2 of the flap valve assembly 1 according to figure 1. Figure 2 shows that the flap valve 3 is attached to the spindle 2 by means of screws 7. Spindle 2 is connected to an actuator 6 for actuating the spindle 2 and thereby moving the flap valve 3 between the substantially closed and substantially open position thereof.

Figure 3 is a cross-sectional view on the line III-III of Figure 2. Figure 3 shows the lamination of the flap valve 3 having outer support layers and an intermediate elastomeric layer. Figure 3 also shows that the outer edge 8 of the support layers 3a, 3b is chamfered.

## Claims

1. Flap Valve Assembly (1) for controlling the flow of air along a passage (4) comprising a spindle (2), which is rotatable about its axis, extending across the passage (4) and a flap valve (3) secured to the spindle (2) inside the passage (4) such that rotation of the spindle (2) causes the flap valve to pivot about the spindle (2) axis, wherein the flap valve (3) is moveable between a position in which the passage (4) is substantially fully closed and a position wherein the passage (4) is substantially fully open **characterised in that**, the flap valve (3) comprises a lamination of a support layer (3a, 3b) and an elastomeric layer (3c), the outer diameter (D3) of the support layer (3a, 3b) being smaller than the inner diameter (D2) of the passage (4) and the outer diameter (D1) of the elastomeric layer (3c) being greater than the outer diameter (D2) of the passage (4).

2. Flap valve assembly (1), according to claim 1, wherein the flap valve (3), comprises a lamination of a first (3a) and a second (3b) outer support layer with an intermediate elastomeric layer (3c).

3. Flap valve assembly (1) according to claim 1 or 2, wherein the flap valve (3) comprises a metallic support layer (3a, 3b).

4. Flap valve assembly (1) according to claim 1 - 3, wherein the elastomeric layer (3c) comprises ((Sylvie lease add the preferred rubber)).

5. Flap valve assembly (1), according to one of the preceding claims, wherein the elastomeric layer (3c) has a thickness of 0.5-2.5mm, preferably 1mm.

6. Flap valve assembly (1), according to one of the preceding claims, wherein the outer edge (8) of the support layer (3a, 3c) is chamfered.
